# EUROPEAN PATENT APPLICATION

(11) **EP 0 666 121 A1**
(43) Date of publication of application: **09.08.1995**
(21) Application number: 94830042.1
(22) Date of filing: 04.02.1994
(51) Int. Cl.: B09B 3/00

(54) **Method and apparatus for making asbestos-containing waste inert**

(71) Applicant: ENEA ENTE PER LE NUOVE TECNOLOGIE, L'ENERGIA E L'AMBIENTE, I-00198 Roma (IT); NUCLECO S.p.A., I-00060 Roma (IT)
(72) Inventor: Beone, Girolamo, I-00165 Roma (IT); Coronidi, Maurizio, I-00141 Roma (IT); Cao, Silvio, I-00048 Nettuno (IT); Filoni, Danilo, I-63017 Porto San Giorgio (IT)
(74) Representative: Sarpi, Maurizio

(57) **Abstract**

The following steps are provided: reducing the volume of the waste contained in metal drums or in flexible bags of polypropylene to a volume of about 1/4 of the initial volume, with previous homogenizing in case of flexible big bags, thus providing cakes of consistency and solidity comparable to those of the traditional building materials; arranging the cakes into containers of reinforced concrete and casting within the latter a filling and sealing mortar giving the end product characteristics of mechanical strength and inclusion of material such as to allow the end product to be disposed to dumping-places of the type 2A according to the rules in force. The apparatus comprises means for supplying the container of asbestos-containing waste to a crumbling assembly (in case of the big bags) where the homogenizing step and the addition of a bonding agent are carried out, means of controlling and proportioning the crumbled material, a compacting press which can also be supplied with the asbestos-containing waste in metal drums, and means for arranging the cakes from the press into containers of reinforced concrete and then for carrying out the sealing casting.

## Description

The present invention relates to the technique of handling and disposing waste containing toxic and/or harmful components, reference being made in particular to the asbestos-containing waste (ACW) and to the dumping-places where such waste may be disposed.
This invention relates particularly to a method of making ACW inert by including them into a cement matrix so as to provide an inert product to be disposed to a dumping-place with the utmost observance of the law and the environment protection. The invention also relates to the apparatus for carrying out such method.

The Italian regulations in force including the rules of EEC (European Economic Community) regarding toxic, harmful waste put asbestos (dust and fibres) on the list of substances which make the waste toxic and harmful if contained to a determined concentration.
In said regulations the limit concentration (LC) of asbestos making the waste toxic and harmful is determined; such concentration expressed as free dust and fibres is 100 mg/kg. It is further established that the dumping-places of second category, type A(2A), are intended for the final disposal of special inert waste (class 1) such as the building waste materials.
However, specific reference is made to the circumstance that the asbestos-containing waste (Class 4) may be disposed to dumping-places of second category, type A(2A) if such waste is inert, i.e. keeps their mechanical and physical characteristics in time without releasing dust and fibres also under heavy environmental conditions (fire, dipping into liquids) or under accidental conditions (fall).

Systems for making ACW inert by including them into a cement matrix in order to avoid the danger of pollution caused by the dispersion of the asbestos fibres in the air are known for a long time. However, all of these systems have the serious drawback of increasing the volume of the end product with respect to the original volume of the waste, thus significantly increasing the disposal cost. Furthermore, in case of collision or crushing of the end product, the fibres of asbestos can be released to a greater extent than the safety limits.

The present invention seeks to provide a method and the relative apparatus for handling asbestos-containing waste, thus avoiding in all steps of the method the dispersion of free dust and fibres to the environment, assuring the protection of the personnel employed according to the rules, allowing "inert" products to be provided which may be disposed to dumping-places of the type 2A in the same way as the usual building materials, and significantly reducing the volume of the waste to be handled.

This invention will now be described with reference to the annexed drawings which show by way of an illustrative, non-limitative example a preferred embodiment of the invention.

In the drawings:
Fig. 1 shows a cylindrical container used for including into a current matrix the waste treated according to the invention;
Fig. 2 shows an alternative embodiment of the container in form of a parallelepiped used for the same purpose;
Fig. 3 is a top view of the apparatus for carrying out the method;
Figs. 4 and 5 are two section views along planes A-A and B-B of the apparatus of Fig. 3, respectively.

The method according to the invention comprises essentially the following steps:
A. Homogenizing the waste contained in flexible big bags of polypropylene and then reducing the volume by super-compacting the asbestos-containing waste under a pressure of the order of 200 kg/cm², thus providing a modification of the mechanical and physical properties of the waste which thus assumes a texture comparable to the building materials (gypsum and the like) at a density of the order of 1200-1400 kg/m³.
   The resulting cake is transferred to the second step of the process.
   In case the waste is included into rigid metal drums, the reduction of volume mentioned above entails the production of cakes with metal shell including the waste and having the same initial diameter and a height reduced to about 1/4.
B. Including the waste produced in the super-compacting step into a cement matrix. This second step provides the inclusion of the cakes or the solid masses into a cement container which may have the form of a cylinder or a parallelepiped. The cylindrical container of standard size is shown in Fig. 1. It is formed of a hollow body of concrete which is conveniently seasoned and reinforced with an electrowelded wire net 2. At the top thereof a seat for the cover or a sealing cast is arranged as better seen afterwards. In Fig. 2 another type of container indicated at 4 is shown having the form of a parallelepiped and made also of reinforced concrete of standard size, within which the cakes or solid masses 5 are arranged on one another by automatically releasable mechanical pliers so as to form side by side piles.
   At the top of container 4 cakes 5 are secured by a cross joint system 6 to avoid their floating during the cementation step. Such cross joint system 6 is embedded into the sealing cast. At the upper corners there are provided eye-bolts 7 useful when the container has to be lifted.

In Figs. 3, 4 and 5 the apparatus for carrying out the method described above is illustrated.
Asbestos-containing waste included into a flexible big bag 8 of polypropylene carried by hoist 9 is lowered into a supply room 10 connected to a crumbling assembly 11 which breaks up finely and homogenizes the asbestos-containing waste included in bag 8.
The uniform granulometry provided by the crumbling assembly 11 also allows the above-mentioned rules to be respected for the end products as far as any release of asbestos fibres even in case of total break of the primary container is concerned. Furthermore, this allows materials of any origin to be accepted without previously selecting ferrous materials a.s.o.
According to a feature of the invention, during the step of crumbling a bonding agent is added in order to soak the asbestos fibres before the step of super-compaction. This assures that in case of total break of the primary container the release of dust and/or fibres is lower than the safety limits.
After the crumbling, an amount of material proportioned, for example, by a loading cell 11A under assembly 11 is fed into the compacting room 12, in which a hydraulic or oleopneumatic piston 13 carries out the requested reduction of volume, at the end of which a cake 14 exactly calibrated as for both weight and size is provided so as to fill to an optimum extent container 15 which may be the already described container of Fig. 1.

Cake 14 (Fig. 5) is taken out of compacting room by a tiltable plate 16 which places it to a horizontal plane. Under such plate 16 a vessel 16A for collecting the liquid is provided.
As shown in Fig. 4, a branched conduit or tunnel 17 leading downstream of crumbling assembly 11 is provided for selectively supplying compacting room 12 with metal drums 18 of asbestos-containing waste carried by hoist 9. It is self-evident that at the end of the compacting step the thus obtained cake appears as coated by the metal layer of the drum.
Downstream of the compacting room a shuttle carriage 20 provided with two carrying pliers 21 and 22 is arranged. Pliers 21 take out cakes 14 from tiltable plate 16 and place them on one another into container 15. Once filled the container, pliers 22 take out from the pile 23 a grid 24 and lay it down on the top of the container so as to lock the underlying cakes.
The filled containers provided with closure grids (Figures 3 and 4) are fed in succession to the filling station where they are filled with mortar of cement, such station comprising a silo 25 which contains pre-mixed materials, and a supplying tube 26 for the sealing cast. As already described, such cast has the double purpose of filling the voids among cakes and container, and sealing the top.
Cement should preferably be of the pozzolanic type, sand should be dried and have a sufficiently differentiated granulometry, water should be pure enough and without appreciable amounts of slime, clays, organic acids, alkali, and salts. The water/cement ratio and the addition of additive should be such as to allow an optimum fluidity without detriment of the characteristics of mechanical strength.
After the casting the closed and sealed containers indicated at 27 are transferred to the seasoning step and the following steps ending with the transport to the dumping-place.

The monolithic product provided by the method described above is:
- generally lacking in dust and asbestos fibres all over the outer surface;
- provided with mechanical strength greater than 21,5 MPa;
- provided with mechanical strength after thermal cycles greater than 5 MPa;
- resisting to the vertical fall;
- not releasing dust and fibres after dipping into water.
Under such conditions the product is "inert" and then capable of being disposed to dumping-places of the type 2A like the building waste materials having the lowest cost (presently, about 10 Lit/kg).

The present invention has been illustrated and described with reference to a preferred embodiment thereof, however, it should be understood that modifications can be made by those skilled in the art without departing from the scope of the present industrial invention.

## Claims

1. A method for making asbestos-containing waste inert, characterized by the following steps: homogenizing and super-compacting the waste, and including the compacted waste into a cement matrix so as to provide a monolithic inert end product capable of being disposed to dumping-places of the type 2A according to the rules in force.

2. Method according to claim 1, characterized in that the super-compacting step is carried out at a pressure of the order of 200 kg/cm² such as to modify the mechanical and physical characteristics of the asbestos-containing waste.

3. Method according to claims 1 and 2, characterized in that the super-compacting step is carried out with the material contained in a metal shell or with the material previously homegenized, and the reduction of volume at the end of the super-compaction reaches about 1/4 of the initial volume.

4. Method according to claims 1 to 3, characterized in that the homogenizing of the material is carried out by crumbling the material contained in flexible bags.

5. Method according to claims 1 to 4, characterized in that during the crumbling step a bonding agent is fed for soaking the asbestos fibres before the super-compacting step in order to provide cakes susceptible to release harmful fibres and/or dust to an extent lower than the safety limit even in case of total break of the container.

6. Method according to claims 1 to 5, characterized in that at the end of the super-compacting step the material has a consistency and a solidity comparable to those of the usual building materials, even if they have initially powder and/or crumbly components, with density of the order of 1200-1400 kg/m³.

7. Method according to claims 1 to 6, characterized in that the cakes of super-compacted material are let into a container by automatically operating mechanical pliers having the function of avoiding the release of dust and fibres, and said container is filled and sealed with a cast of cement mortar filling the free room.

8. Method according to claims 1 to 7, characterized in that said container has the form of a cylinder or a parallelepiped made of vibrated concrete mix reinforced with an electrowelded wire net.

9. Method according to claims 1 to 8, characterized in that the cakes are locked within the container by a metal top cross joint which is embedded in the filling cast.

10. An apparatus for carrying out the method according to claims 1 to 9, wherein it comprises in combination a super-compacting press supplied through a loading hopper, with the asbestos-containing waste included in flexible bags of polypropylene, a crumbling assembly being located between the hopper and the press and associated to control and proportioning means for the crumbled material, thus providing at the exit of the press super-compacted cakes of predetermined, constant weight and size so as to allow an optimum filling of the container.

11. Apparatus according to claim 10, wherein it comprises means for filling a bonding agent into the crumbling assembly in order to soak the asbestos fibres before they reach the super-compacting press so as to provide at the exit of the latter cakes susceptible of releasing harmful fibres and/or dust to a lower extent than the safety limit, even in case of total break of the container.

12. Apparatus according to claims 10 and 11, characterized in that the arrangement of the cakes into the containers and the placement of a top grid above each filled container are carried out automatically by mechanical pliers carried by a shuttle carriage.

13. Apparatus according to claims 10 to 12, characterized in that the filled containers are supplied in succession to a concrete mixing equipment, in which the casting of cement mortar is automatically carried out for filling the free room within the container and forming the closure cover in which said top grid is embedded.
